# FASCICULE DE BREVET EUROPEEN

(11) **EP 3 647 093 B1**
(45) Date de publication et mention de la délivrance du brevet: **13.04.2022**
(21) Numéro de dépôt: 18203333.2
(22) Date de dépôt: 30.10.2018
(51) Int. Cl.: B60J 1/00, B60J 1/17, B60J 5/04

(54) **DISPOSITIF VITRÉ D'UN VÉHICULE AVEC PATIN DE GUIDAGE DÉMONTABLE, PORTE, VÉHICULE ET PROCÉDÉ DE MONTAGE CORRESPONDANTS**
VERGLASTE VORRICHTUNG EINES FAHRZEUGS MIT DEMONTIERBAREM GLEITSCHUH, ENTSPRECHENDE TÜR, ENTSPRECHENDES FAHRZEUG UND MONTAGEVERFAHREN
GLAZED VEHICLE DEVICE WITH REMOVABLE GUIDE SHOE, DOOR, VEHICLE AND CORRESPONDING MOUNTING METHOD

(43) Date de publication de la demande: 06.05.2020
(73) Titulaire: Advanced Comfort Systems France SAS - ACS France, 79302 Bressuire Cedex (FR)
(72) Inventeur: CHARGE, Philippe, 79300 BRESSUIRE (FR)
(74) Mandataire: Vidon Brevets & Stratégie

(56) Documents cités:
- EP-A1- 3 708 756
- WO-A1-2014/191812
- WO-A1-2018/104592
- DE-A1-102016 201 106
- US-A- 5 086 589

## Description

### 1. Domaine de l'invention

Le domaine de l'invention est celui des véhicules automobiles.

Plus précisément, l'invention concerne les portes de véhicule, et en particulier l'équipement de baies ménagées dans de telles portes.

Plus précisément encore, l'invention concerne les portes de véhicule équipées d'au moins un panneau vitré mobile sensiblement verticalement, notamment pour passer d'une position fermée à une position ouverte dans laquelle il pénètre intégralement ou partiellement dans un caisson inférieur de carrosserie (le panneau mobile pouvant, bien sûr, prendre généralement, une pluralité de positions intermédiaires).

Une telle porte de véhicule peut notamment être une porte latérale, mais l'invention peut également s'appliquer, par exemple, aux portes battantes et/ou coulissantes d'un véhicule, y compris les portes arrière, les hayons...

L'invention concerne en particulier un dispositif vitré, destiné à être assemblé à un caisson de carrosserie pour former une porte de véhicule, sur lequel la surface vitrée est affleurant, c'est-à-dire selon lequel aucun cadre n'apparaît vu de l'extérieur.

### 2. Art antérieur

Des exemples de tels dispositifs sont décrits notamment dans les documents de brevet EP 1 422 091, EP 1 612 072, DE 10 2016 201106 et EP 3 708 756.

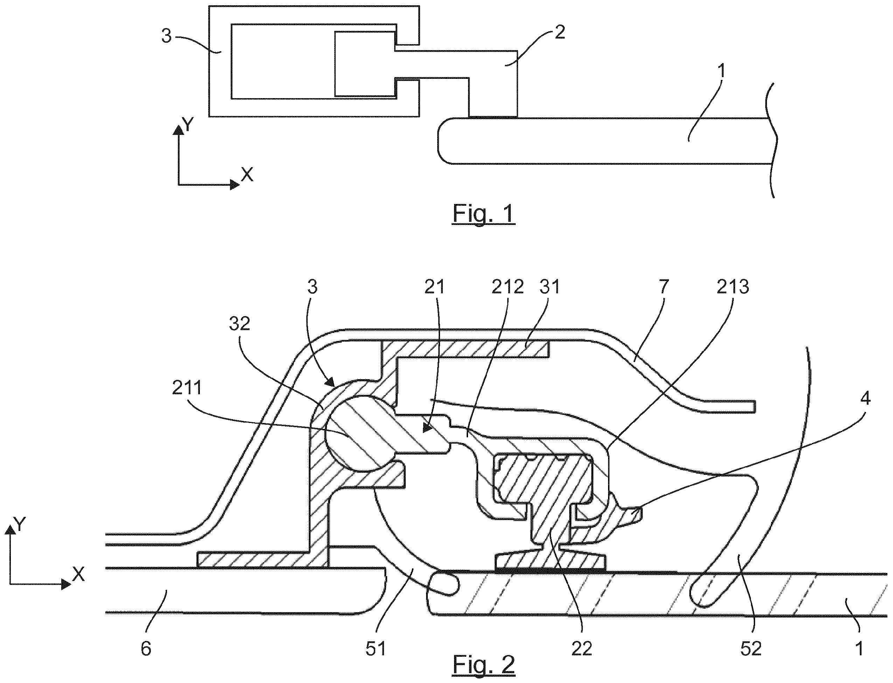

Selon cette approche, un cadre est prévu, du côté orienté vers l'intérieur du véhicule, portant un ou plusieurs (classiquement deux) rails, coopérant avec des patins solidaires du panneau vitré mobile, et fixés sur la face de celui-ci orientée vers l'intérieur du véhicule. Le cadre peut, le cas échéant, être tronqué et être limité à des montants portant les rails. Sur la vue schématique en coupe de la figure 1, on a représenté un patin 2 d'un panneau vitré 1 mobile qui coulisse dans un rail de guidage 3, le patin étant relié au panneau vitré 1 mobile et permettant le guidage en déplacement de ce dernier.

Cette technique est intéressante, car elle permet de concevoir des designs originaux, du fait de la suppression du cadre de porte classique, tout en conservant un guidage et un maintien efficaces du panneau mobile.

Cependant, dans certains cas, l'assemblage du dispositif vitré au caisson de carrosserie, pour former la porte, peut causer problème.

Une solution connue consiste à procéder au montage de la vitre équipée de patins dans les dispositifs de guidage (rails) puis à l'assemblage de l'ensemble sur la structure de porte. Cette solution nécessite d'intégrer sur ligne d'assemblage le montage d'un module complet. En outre, le remplacement de la vitre (par exemple, suite à un accident) nécessite un démontage complet du module.

Une autre solution connue consiste à procéder au montage de la vitre équipée de patins par l'extrémité supérieure des rails de guidage.

Un inconvénient de cette solution est que la structure de porte doit être découpée en partie supérieure pour permettre le passage de la vitre ce qui peut avoir des conséquences sur la rigidité de la porte. Il est en outre nécessaire de rapporter une traverse supérieure sur la porte après montage de la vitre. Cette traverse doit être démontée lorsque l'on souhaite remplacer la vitre.

Encore une autre solution consiste à procéder au montage de la vitre équipée de patins dans les dispositifs de guidage par déformation des zones de guidage des patins.

Cette solution nécessite, après montage de la vitre, d'ajouter une pièce qui empêche le déclipsage du patin pour garantir la tenue en fonctionnement et l'inviolabilité.

Une dernière solution consiste à séparer le dispositif de guidage en deux parties, à savoir une partie intérieure et une partie extérieure. Dans ce cas de figure, on procède au montage de la partie intérieure du dispositif de guidage sur la structure de porte, puis au montage de la vitre équipée de patins, et enfin au montage de la partie extérieure qui vient fermer le dispositif de guidage et maintenir le patin.

Un inconvénient de cette solution est qu'elle nécessite de démonter la partie extérieure du dispositif de guidage lorsque l'on souhaite remplacer la vitre.

### 3. Objectifs de l'invention

L'invention a notamment pour objectif de pallier ces inconvénients de l'art antérieur.

Plus précisément, l'invention a pour objectif, dans au moins un mode de réalisation, de fournir un dispositif vitré pour la réalisation d'une porte de véhicule, qui soit simple à mettre en œuvre et à assembler, par exemple, sur une chaîne de montage.

Un autre objectif de l'invention, selon au moins un mode de réalisation, est de fournir un tel dispositif vitré, qui puisse être aisément maintenu ou remplacé, par exemple, suite à un accident.

### 4. Exposé de l'invention

Ces objectifs, ainsi que d'autres qui apparaîtront par la suite sont atteints à l'aide d'un dispositif vitré destiné à être assemblé à un caisson de porte pour former une porte de véhicule automobile, comprenant au moins un panneau vitré mobile portant, sur sa face orientée vers l'intérieur du véhicule, au moins un patin de guidage monté coulissant par rapport à un rail de guidage en coulissement dudit panneau vitré mobile entre une position d'obturation et au moins une position d'ouverture.

Selon l'invention, ledit au moins un patin de guidage est monté de façon réversible sur un support de patin monobloc monté fixe sur ledit panneau vitré mobile, et ledit au moins un patin de guidage et ledit au moins un support de patin sont configurés de sorte à ce que le patin de guidage puisse être inséré par coulissement sur le support de patin par les extrémités supérieure et inférieure du support de patin.

L'invention propose ainsi de mettre en œuvre un patin de guidage en coulissement d'une vitre relativement à un bâti de porte de véhicule qui présente une structure en deux parties.

Cette structure particulière du ou des patin(s) de guidage permet de monter une vitre équipée de patin(s) dans un ou des rail(s) de guidage, les patins garantit un maintien de la vitre dans le ou les rails de guidage suivant les directions X (correspondant à la longueur du véhicule) et/ou Y (correspondant à la largeur du véhicule).

Elle permet en outre un montage pièce-à-pièce du dispositif vitré sur la ligne d'assemblage sur une porte de véhicule, et un remplacement facile de la vitre suite à un accident, par exemple.

Enfin, cette structure particulière du ou des patin(s) de guidage assure un guidage précis et prédéterminé du panneau vitré mobile dans le ou les rails de guidage.

Selon un aspect particulier de l'invention, le patin de guidage ou le support de patin correspondant porte un dispositif de maintien du patin de guidage sur le support de patin.

Avantageusement, le dispositif de maintien comprend une languette d'encliquetage déformable portée par le support de patin ou le patin de guidage et adaptée pour coopérer avec un évidement ménagé sur le patin de guidage ou le support de patin respectivement.

Dans une variante de mise en œuvre, le dispositif vitré comprend un dispositif de maintien du patin de guidage sur le support de patin correspondant prenant la forme d'une goupille venant traverser le patin de guidage et le support de patin ou d'une pièce venant s'encliqueter sur le patin de guidage et le support de patin.

Préférentiellement, le support de patin s'étend le long d'un des bords latéral dudit panneau vitré mobile, sur sa face orientée vers l'intérieur du véhicule.

Selon une mise en œuvre particulière de l'invention, le support de patin ou le patin de guidage présente un profil en forme de "T" et le patin de guidage ou le support de patin respectivement présente une rainure de réception dudit profil de forme complémentaire audit profil, de sorte à ce que le patin de guidage puisse être inséré par coulissement sur le support de patin à partir d'une extrémité du support de patin.

De façon avantageuse, le support de patin est fixé directement sur ledit panneau vitré mobile par collage.

Selon un aspect particulier de l'invention, le patin de guidage comprend au moins une portion de guidage dans le rail de guidage reliée par une portion intermédiaire à une portion de liaison avec le support de patin et ledit panneau vitré mobile.

Selon une mise en œuvre particulière de l'invention, ledit au moins un panneau vitré mobile porte, sur sa face orientée vers l'intérieur du véhicule, deux patins de guidage positionnés sur les bords latéraux opposés de la vitre et montés coulissant par rapport à un rail de guidage correspondant.

L'invention concerne également une porte de véhicule automobile équipée d'un dispositif vitré tel que décrit ci-dessus, et les véhicules automobiles équipés d'au moins un dispositif vitré tel que décrit ci-dessus.

L'invention concerne également un procédé de fabrication et/ou de montage d'un dispositif vitré tel que décrit ci-dessus, comprenant les étapes de :
- fixation dudit au moins un support de patin sur ledit panneau vitré ;
- montage dudit au moins un rail de guidage sur la structure de porte ;
- positionnement dudit au moins un patin de guidage sur ledit au moins un rail de guidage avant ou après le montage dudit au moins un rail de guidage sur la structure de porte ;
- montage de la vitre portant ledit au moins un support de patin sur ledit au moins un patin de guidage par insertion et coulissement dudit au moins un patin de guidage sur ledit au moins un support de patin par les extrémités supérieure et inférieure du support de patin.

De façon préférentielle, le patin de guidage est maintenu provisoirement en position sur le rail de guidage au moyen d'un dispositif de retenue de sorte à faciliter l'étape de montage de la vitre sur ledit au moins un patin de guidage.

Dans le cadre d'un système flush pièce à pièce, l'approche de l'invention se différencie des solutions existantes en ce qu'elle propose de monter directement sur la porte une vitre mobile non équipée de patins de guidage mais uniquement de support de patins, avec une cinématique de montage simple (montage suivant la direction "Z", par exemple). L'approche de l'invention permet en outre de pouvoir séparer simplement les parties de guidage et de support des patins pour faciliter le démontage de la vitre en service après-vente.

### 5. Liste des figures

L'invention, ainsi que les différents avantages qu'elle présente, seront plus facilement compris grâce à la description qui va suivre, donnée à titre simplement illustratif et non limitatif en référence aux figures annexées, parmi lesquelles :
- la figure 1 est une vue en coupe schématique d'un dispositif vitré de porte de véhicule automobile de l'art antérieur ;
- la figure 2 est une vue en coupe schématique d'un dispositif vitré de porte de véhicule automobile conforme à l'invention ;
- les figures 3A et 3B est une vue partielle du dispositif vitré, vu du côté intérieur du véhicule, montrant le montage du patin de guidage en coulissement du panneau vitré mobile sur un support de patin fixé à ce dernier ;
- la figure 4 est une vue en coupe schématique d'un dispositif vitré de porte de véhicule automobile conforme à l'invention illustrant la séparation à l'aide d'un outil du patin de guidage et du support de patin ;
- les figures 5A à 5G illustrent les principales étapes d'une première solution d'assemblage du dispositif vitré conforme à l'invention sur une porte latérale de véhicule ;
- les figures 6A et 6B illustrent certaines des étapes d'une deuxième solution d'assemblage du dispositif vitré conforme à l'invention sur une porte latérale de véhicule.

### 6. Description détaillée d'un mode de réalisation de l'invention

L'invention concerne donc une nouvelle technique de guidage de la partie vitrée d'une porte (porte latérale, porte arrière, hayon, porte de cabine...) de véhicule automobile dont la vitre, ou panneau mobile, est parfaitement alignée et affleurante avec la carrosserie, c'est-à-dire qu'aucun cadre ou élément de cadre ne fait saillie vers l'extérieur du véhicule, par rapport au plan de cette partie vitrée.

Plus précisément, l'invention concerne une nouvelle structure de patin de guidage du panneau vitré destiné à coopérer avec un rail de guidage en coulissement du panneau vitré. Cette structure particulière sera détaillée par la suite en relation avec les figures 2 à 6B.

Dans l'exemple illustré, le dispositif vitré destiné à être assemblé à un caisson de porte pour former une porte de véhicule automobile, comprend un panneau vitré, ou vitre, 1 mobile portant, sur sa face orientée vers l'intérieur du véhicule, deux supports de patin 22 monoblocs (c'est-à-dire en une seule pièce). Les supports de patin 22 sont reliés chacun à un patin de guidage 21 monté coulissant par rapport à un rail de guidage 3 en coulissement du panneau vitré 1 mobile entre une position d'obturation et au moins une position d'ouverture.

Les supports de patin 22 reliés aux patins de guidage 21 sont chacun positionnés sur un bord latéral panneau du panneau vitré 1, sur sa face orientée vers l'intérieur du véhicule, le panneau vitré 1 venant coulisser le long des rails de guidage 3 verticaux du caisson de porte, les rails de guidage 3 permettant de guider en translation le panneau vitré 1 mobile au cours de son déplacement.

Dans une variante, le panneau vitré 1 peut ne porter qu'un seul support de patin 22 relié à un unique patin de guidage 21 monté coulissant par rapport à un unique rail de guidage 3.

Le panneau vitré 1 mobile est entraîné en déplacement par des moyens d'entraînement (non illustrés), par exemple un mécanisme à crémaillère, actionné lui-même par un moteur électrique. D'autres moyens d'entraînement, y compris des moyens d'entraînement manuels, peuvent bien sûr être mis en œuvre.

Le panneau vitré 1 mobile est donc guidé en coulissement entre deux rails de guidage 3 situés respectivement à l'avant et à l'arrière du caisson de porte par l'intermédiaire d'une paire (ou plus) de patins de guidage 21.

Les supports de patin 22 et les patins de guidage 21 correspondants sont fixés sur la face du panneau vitré 1 mobile orienté vers l'intérieur du véhicule, pour coopérer avec les rails de guidage 3. Comme illustré sur la vue schématique en coupe de la figure 2, le patin de guidage 21 est monté sur un support de patin 22 s'étendant parallèlement au panneau vitré 1 mobile, le long d'un des bords latéraux de ce dernier.

L'invention propose ainsi de séparer, sur les patins, les fonctions de guidage et de liaison avec la vitre. Pour ce faire, le support de patin 22 assure la liaison avec la vitre (par exemple par collage) et le patin de guidage 21 est rapporté sur ce support de patin 22.

Le patin de guidage 21 peut être rapporté sur son support de patin 22 suivant les directions X, Y ou Z. La direction Z est privilégiée car c'est suivant cette direction que l'assemblage patin/support subira les contraintes les plus faibles.

Le patin de guidage 21 ou le support de patin 22 comprend un dispositif de maintien 4 qui bloque le patin de guidage 21 sur son support. Ce dispositif de maintien 4 est conçu de façon à résister aux manœuvres de vitre suivant la direction Z et à ne pas être sollicité lors d'efforts exceptionnels (vandalisme par exemple) suivant les directions X et Y. Par ailleurs, ce dispositif de maintien 4 ne peut être déverrouillé que depuis le côté intérieur de la vitre 1 pour garantir l'inviolabilité.

Dans l'exemple ci-dessous, le dispositif de maintien 4 est un clip ou languette d'encliquetage déformable porté(e) par le support de patin 22 (et situé(e) à égale distance des extrémités du support de patin 22) et adapté(e) pour coopérer avec un évidement 214 ménagé sur la surface extérieure de la portion de liaison 213 du patin de guidage 21 (à égale distance des extrémités du patin de guidage 21).

Cette languette d'encliquetage vient se loger dans l'évidement 214 et bloque le patin de guidage 21 sur son support par pincement.

La languette déformable peut également être portée par le patin de guidage 21 et coopérer avec un évidement ménagé sur le support de patin 22 (solution non illustrée).

D'autres dispositifs de maintien peuvent être utilisés (goupille, pièce rapportée à clipper,...).

Deux lèvres d'étanchéité 51, 52 sont disposées de part et d'autre du patin de guidage 21 et de son support.

Comme on le verra par la suite, le patin de guidage 21 peut être monté à différentes étapes du procédé d'assemblage du dispositif vitré.

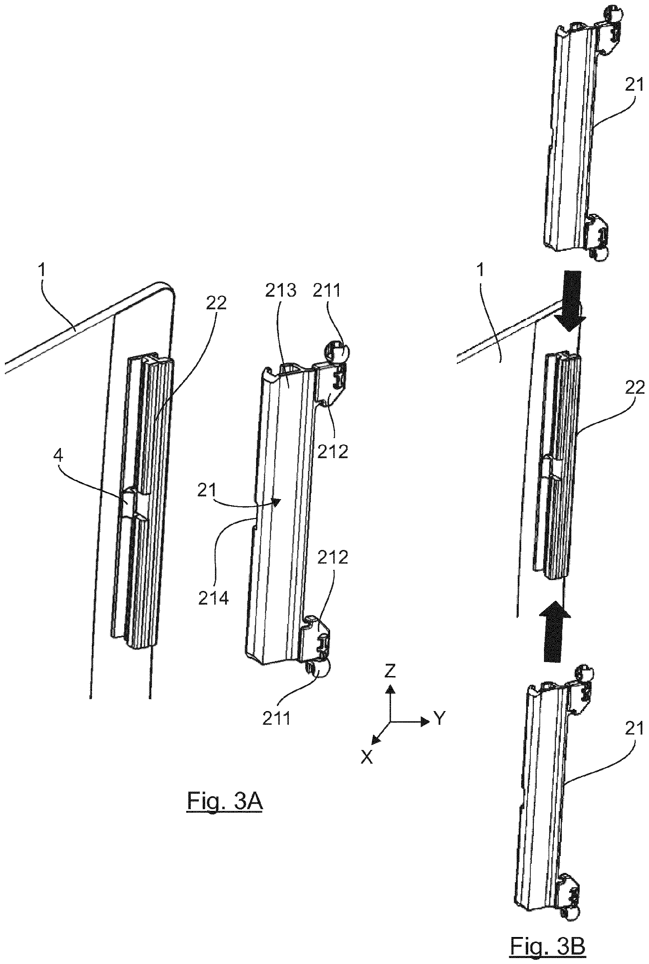

Le rail de guidage 3 comprend notamment :
- une zone 31 de solidarisation au châssis 7 du véhicule ;
- une zone de guidage 32, apte à coopérer avec la ou les portions de guidage 211 d'un patin de guidage 21 de forme essentiellement sphérique (sur les figures 3A et 3B, le patin de guidage 21 porte deux portions de guidage 211 situés à ses extrémités longitudinales). La section de cette zone de guidage 32 est essentiellement circulaire, avec une ouverture permettant le passage d'une portion intermédiaire 212 du patin 21 ;
- une surface 33, sur laquelle un enjoliveur 6 est rapporté et positionné de façon à être aligné avec le bord du panneau vitré 1 mobile tout en minimisant le jeu avec ce dernier, pour des raisons esthétiques.

Ainsi, les rails de guidage 3 présentent une zone de guidage 32 de section essentiellement circulaire, le ou lesdits patins de guidage 21 correspondant comprenant des portions de guidage 211 qui présentent également une section essentiellement circulaire. Cette forme cylindrique peut notamment faciliter le montage et tolérer des jeux.

D'autres sections des rails de guidage et des portions de guidage des patins, par exemple rectangulaires ou carrés, sont également possibles.

La figure 3A montre d'une part un panneau vitré 1 mobile portant un support de patin 22 et un patin de guidage 21 destiné à venir se placer sur le support de guidage 22 comme illustré sur la figure 3B. Les flèches de la figure 3B illustrent la façon selon laquelle le patin de guidage 21 est inséré sur son support (suivant une direction "Z") par l'extrémité supérieure ou inférieure du support de guidage 22.

On comprend que le patin de guidage 21 est solidarisé au support de guidage 22 du panneau vitré 1 mobile une fois que la languette d'encliquetage 4 vient coopérer avec l'évidement 214 du patin de guidage 21.

Le support de guidage 22 présente ici un profil en "T", la base du support de guidage 22 étant fixé sur la surface intérieure du panneau vitré 1, la base portant un bourrelet venant se loger dans l'espace intérieur délimité par la portion de liaison 213 du patin de guidage 21. Cet espace intérieur présente une section globalement en "U" dans laquelle le bourrelet du support de guidage 22 peut venir se loger et se déplacer en coulissement (ce déplacement n'est plus possible lorsque la languette d'encliquetage 4 vient coopérer avec l'évidement 214 du patin de guidage 21).

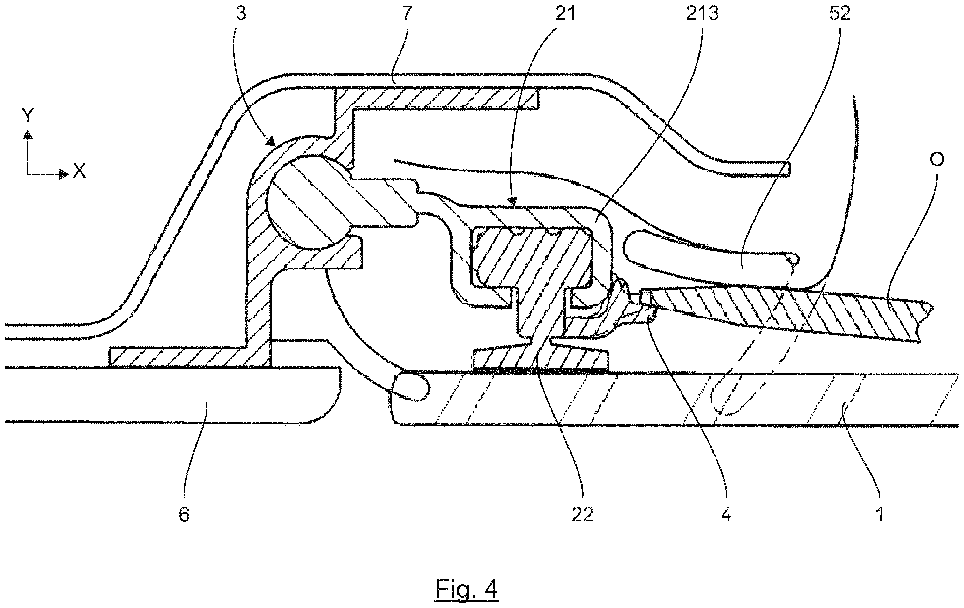

La figure 4 illustre un exemple de déverrouillage de la languette d'encliquetage 4 formant dispositif de maintien par l'intérieur de la vitre, à l'aide d'un outil O (cette opération peut toutefois être réalisée sans outil). Une fois que la languette d'encliquetage 4 est déplacée ou écartée de l'évidement 214 à l'aide de la pointe de l'outil O, il est possible de séparer le patin de guidage 21 du support de patin 22 par translation de l'un des deux. Le joint (lèvre) d'étanchéité 52 est soulevé pour permettre le passage de l'outil O et peut rester en place durant cette opération de déverrouillage.

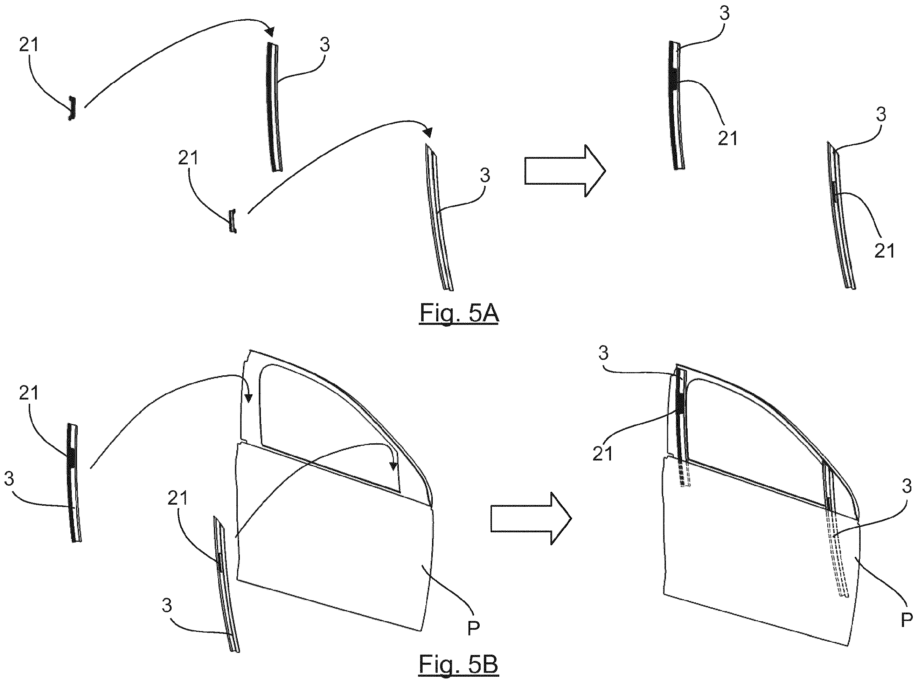

Les figures 5A à 5G illustrent les principales étapes d'une première solution d'assemblage du dispositif vitré sur une porte latérale de véhicule.

Dans cet exemple, il est prévu deux rails de guidage en coulissement de la vitre.

Selon une première étape (non illustrée), on procède à la fixation du ou des support(s) de patin(s) 22 sur la vitre (par exemple par collage).

On procède, par ailleurs, au montage (figure 5A) du ou des patin(s) de guidage 21 dans le(s) rail(s) de guidage 3 et à la fixation du(des) patin(s) dans une position de montage grâce à un dispositif de calage ou de retenue (non illustré), amovible ou non. Ce dispositif de retenue peut être constitué par une forme particulière du rail de guidage 3, par un élément sécable du rail de guidage 3 ou du patin de guidage 21, ou bien par l'ajout d'une pièce rapportée.

Ledit au moins un patin de guidage 21 est ainsi maintenu provisoirement en position sur ledit au moins un rail de guidage 3 au moyen du dispositif de retenue de sorte à faciliter l'étape de montage de la vitre sur ledit au moins un patin de guidage.

Les patins de guidage 21 sont alors temporairement bloqués en coulissement dans une position de montage (figure 5A).

Dans le cas où deux rails de guidage sont mis en œuvre, ceux-ci peuvent être liés en préparation par au moins une traverse afin de garantir la distance entre ces deux rails de guidage. Sur les illustrations des figures 5A à 5G, les deux rails de guidage 3 ne sont pas reliés par une traverse.

Les rails de guidage peuvent porter des éléments de décor, tels un enjoliveur ou une vitre fixe.

On procède ensuite au montage (figure 5B) sur la structure de porte P du ou des rails de guidage 3 sur lesquels ont été précédemment assemblés les patin(s) de guidage 21, en les insérant en partie dans le caisson inférieur de porte P.

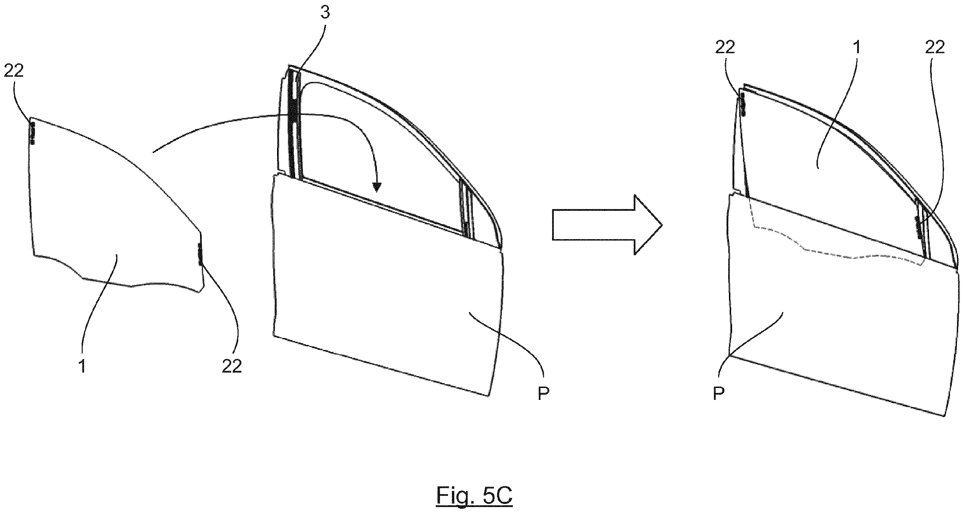

On monte ensuite le panneau vitré 1 équipé des support(s) de patin 22 en l'insérant en partie dans le caisson inférieur de porte P (figure 5C).

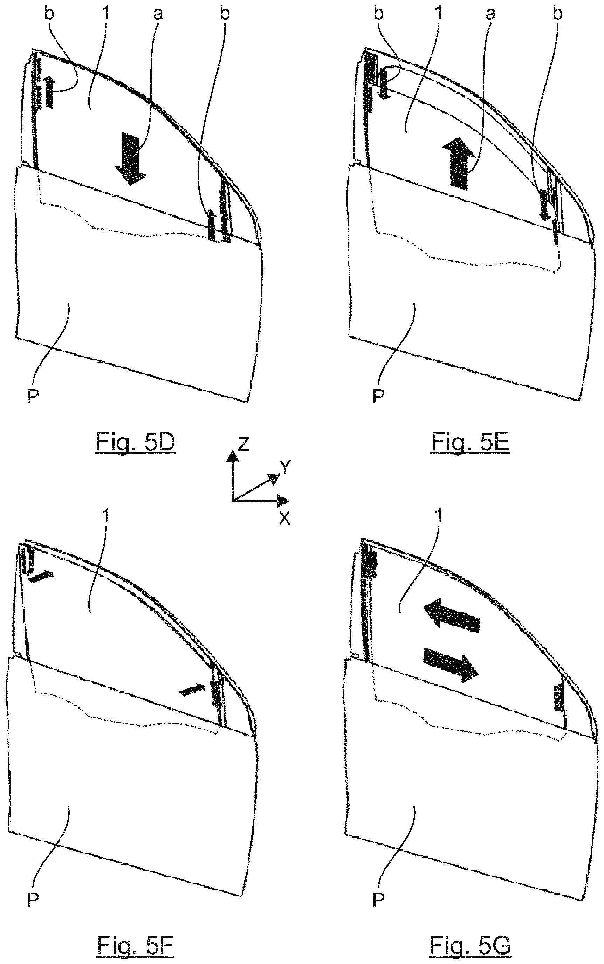

Enfin, on procède à la fixation du ou des support(s) de patin 22 du panneau vitré 1 sur le ou les patin(s) de guidage 21 (figures 5D à 5G).

En fonction de la position du ou des patin(s) de guidage 22 choisie lors de l'étape de préparation, plusieurs solutions sont envisageables :
Solution A) de la figure 5D - insertion du ou des patin(s) de guidage 21 sur le(s) support(s) de patin 22 en descendant le panneau vitré 1 (selon la flèche "a" sur la figure 5D) ou en montant le(s) patin(s) de guidage 21 (selon les flèches "b" sur la figure 5D) : le montage est effectué ici selon la direction « Z » ;
Solution B) de la figure 5E - insertion du ou des patin(s) de guidage 21 sur le(s) support(s) de patin 22 en montant le panneau vitré 1 (selon la flèche "a" sur la figure 5E) ou en descendant le(s) patin(s) de guidage 21 (selon les flèches "b" sur la figure 5E) : le montage est effectué ici selon la direction « Z » ;
Solution C) de la figure 5F - insertion du ou des patin(s) de guidage 21 sur le(s) support(s) de patin 22 suivant une direction perpendiculaire à la surface du panneau vitré 1: le montage est effectué ici selon la direction « Y », ou bien
Solution D) de la figure 5G - insertion du ou des patin(s) sur le(s) support(s) de patin 22 en déplaçant le panneau vitré 1 suivant une direction perpendiculaire au(x) rails de guidage : le montage est effectué ici selon la direction « X » dans un des deux sens illustrés par les flèches.

On note que les joints d'étanchéité peuvent être montés entre ces différentes étapes. La position du montage des joints dans la séquence d'assemblage peut avoir une influence sur le choix de la solution de montage du ou des patin(s) de guidage sur le(s) support(s) de patin.

On note par ailleurs que le montage du lève-vitre dans la porte peut intervenir avant ou après chacune des différentes étapes décrites précédemment. La liaison de la vitre avec le lève-vitre peut se faire avant ou après l'étape illustrée sur l'une des figures 5D à 5G, le choix influant sur le mode d'assemblage du (des) patin(s) de guidage sur le(s) support(s) de patin.

Les éléments d'habillage (enjoliveur, vitre fixe,...) peuvent être montés avant une des étapes des figures 5B et 5C, ou avant l'étape illustrée sur l'une des figures 5D à 5G. Ils peuvent également être montés en préparation sur les rails de guidage.

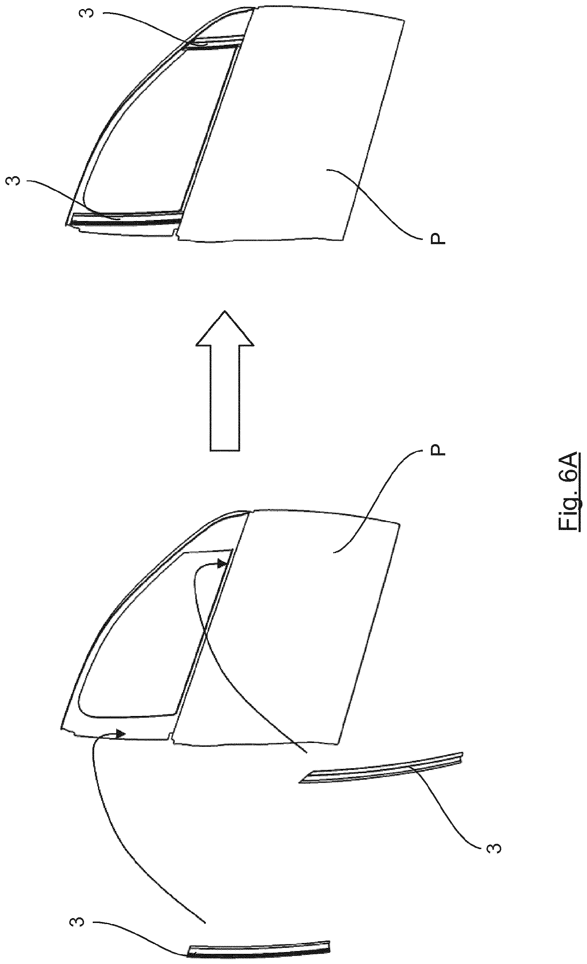

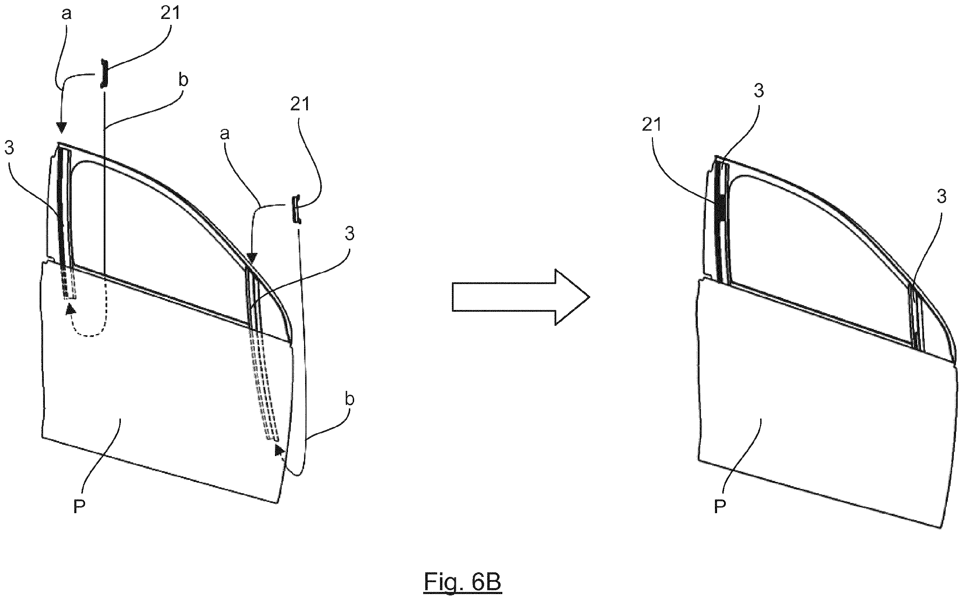

Les figures 6A et 6B illustrent certaines des étapes d'une deuxième solution d'assemblage du dispositif vitré sur une porte latérale de véhicule.

Dans cet exemple, il est prévu deux rails de guidage 3 en coulissement du panneau vitré 1.

Dans une première étape, on procède au montage du ou des rails de guidage 3 sur la structure de porte P, en les insérant en partie dans le caisson inférieur de porte P (figure 6A).

On note que dans le cas où deux rails de guidages 3 sont mis en œuvre, ceux-ci peuvent être liés en préparation par au moins une traverse. Sur les illustrations des figures 6A et 6B, les deux rails de guidage 3 ne sont pas reliés par une traverse.

Dans une deuxième étape, on procède au montage du ou des patin(s) de guidage 21 dans le(s) rail(s) de guidage 3 en les insérant dans ceux-ci par l'extrémité supérieure (a) ou inférieure (b) du ou des rails de guidage 3 (figure 6B). Les patins de guidage 21 sont maintenus en position de montage dans les rails de guidage 3 par un dispositif de calage ou blocage tel que décrit précédemment.

On monte ensuite le panneau vitré 1 équipé des support(s) de patin 22 en l'insérant en partie dans le caisson inférieur de porte P (comme illustré sur la figure 5C).

Enfin, on procède à la fixation du ou des support(s) de patin 22 du panneau vitré 1 sur le ou les patin(s) de guidage 21 (comme illustré sur les figures 5D à 5G).

En fonction de la position du ou des patin(s) de guidage 22 choisie lors de l'étape de préparation, plusieurs solutions sont envisageables :
Solution A) de la figure 5D - insertion du ou des patin(s) de guidage 21 sur le(s) support(s) de patin 22 en descendant le panneau vitré 1 (selon la flèche "a" sur la figure 5D) ou en montant le(s) patin(s) de guidage 21 (selon les flèches "b" sur la figure 5D) : le montage est effectué ici selon la direction « Z » ;
Solution B) de la figure 5E - insertion du ou des patin(s) de guidage 21 sur le(s) support(s) de patin 22 en montant le panneau vitré 1 (selon la flèche "a" sur la figure 5E) ou en descendant le(s) patin(s) de guidage 21 (selon les flèches "b" sur la figure 5E) : le montage est effectué ici selon la direction « Z » ;
Solution C) de la figure 5F - insertion du ou des patin(s) de guidage 21 sur le(s) support(s) de patin 22 suivant une direction perpendiculaire à la surface du panneau vitré 1: le montage est effectué ici selon la direction « Y », ou bien
Solution D) de la figure 5G - insertion du ou des patin(s) sur le(s) support(s) de patin 22 en déplaçant le panneau vitré 1 suivant une direction perpendiculaire au(x) rails de guidage : le montage est effectué ici selon la direction « X » dans un des deux sens illustrés par les flèches.

## Revendications

1. Dispositif vitré destiné à être assemblé à un caisson de porte pour former une porte (P) de véhicule automobile, comprenant au moins un panneau vitré (1) mobile portant, sur sa face orientée vers l'intérieur du véhicule, au moins un patin de guidage (21) monté coulissant par rapport à un rail de guidage (3) en coulissement dudit panneau vitré (1) mobile entre une position d'obturation et au moins une position d'ouverture, ledit au moins un patin de guidage (21) étant monté de façon réversible sur un support de patin (22) monobloc monté fixe sur ledit panneau vitré (1) mobile et présentant des extrémités supérieure et inférieure, **caractérisé en ce que** ledit au moins un patin de guidage (21) et ledit au moins un support de patin (22) sont configurés de sorte à ce que le patin de guidage (21) puisse être inséré par coulissement sur le support de patin (22) par les extrémités supérieure et inférieure du support de patin (22).

2. Dispositif vitré selon la revendication 1, **caractérisé en ce que** le patin de guidage (21) ou le support de patin (22) correspondant porte un dispositif de maintien (4) du patin de guidage (21) sur le support de patin (22).

3. Dispositif vitré selon la revendication 2, **caractérisé en ce que** le dispositif de maintien (4) comprend une languette d'encliquetage déformable portée par le support de patin (22) ou le patin de guidage (21) et adaptée pour coopérer avec un évidement (214) ménagé sur le patin de guidage (21) ou le support de patin (22) respectivement.

4. Dispositif vitré selon la revendication 1, **caractérisé en ce qu'**il comprend un dispositif de maintien (4) du patin de guidage (21) sur le support de patin (22) correspondant prenant la forme d'une goupille venant traverser le patin de guidage (21) et le support de patin (22) ou d'une pièce venant s'encliqueter sur le patin de guidage (21) et le support de patin (22).

5. Dispositif vitré selon l'une des revendications 1 à 4, **caractérisé en ce que** le support de patin (22) s'étend le long d'un des bords latéraux dudit panneau vitré (1) mobile, sur sa face orientée vers l'intérieur du véhicule.

6. Dispositif vitré selon la revendication 5, **caractérisé en ce que** le support de patin (22) ou le patin de guidage (21) présente un profil en forme de "T" et le patin de guidage (21) ou le support de patin (22) respectivement présente une rainure de réception dudit profil de forme complémentaire audit profil, de sorte à ce que le patin de guidage (21) puisse être inséré par coulissement sur le support de patin (22) à partir d'une extrémité du support de patin (22).

7. Dispositif vitré selon l'une des revendications 1 à 6, **caractérisé en ce que** le support de patin (22) est fixé directement sur ledit panneau vitré (1) mobile par collage.

8. Dispositif vitré selon l'une des revendications 1 à 7, **caractérisé en ce que** le patin de guidage (21) comprend au moins une portion de guidage (211) dans le rail de guidage (3) reliée par une portion intermédiaire (212) à une portion de liaison (213) avec le support de patin (22) et ledit panneau vitré (1) mobile.

9. Dispositif vitré selon l'une des revendications 1 à 8, **caractérisé en ce que** ledit au moins un panneau vitré (1) mobile porte, sur sa face orientée vers l'intérieur du véhicule, deux patins de guidage (21) positionnés sur les bords latéraux opposés dudit panneau vitré (1) et montés coulissant par rapport à un rail de guidage (3) correspondant.

10. Porte (P) de véhicule automobile, **caractérisée en ce qu'**elle comprend un dispositif vitré selon l'une quelconque des revendications 1 à 9.

11. Véhicule automobile, **caractérisé en ce qu'**il comprend au moins un dispositif vitré selon l'une quelconque des revendications 1 à 9.

12. Procédé de fabrication et/ou de montage d'un dispositif vitré selon l'une quelconque des revendications 1 à 9, qui comprend les étapes de :
- fixation dudit au moins un support de patin (22) sur ledit panneau vitré (1) ;
- montage dudit au moins un rail de guidage (3) sur la structure de porte ;
- positionnement dudit au moins un patin de guidage (21) sur ledit au moins un rail de guidage (3) avant ou après le montage dudit au moins un rail de guidage (3) sur la structure de porte ;
**caractérisé en ce qu'**il comprend l'étape de:
- montage dudit panneau vitré (1) portant ledit au moins un support de patin (22) sur ledit au moins un patin de guidage (21) par insertion et coulissement dudit au moins un patin de guidage (21) sur ledit au moins un support de patin (22), l'insertion dudit au moins un patin de guidage (21) pouvant être réalisée par les extrémités supérieure et inférieure du support de patin (22).

13. Procédé selon la revendication 12, **caractérisé en ce que** le patin de guidage (21) est maintenu provisoirement en position sur le rail de guidage (3) au moyen d'un dispositif de retenue de sorte à faciliter l'étape de montage du panneau vitré (1) sur ledit au moins un patin de guidage (21).

## Patentansprüche

1. Verglasungsanordnung, die dazu bestimmt ist, mit einem Türkasten verbunden zu werden, um eine Kraftfahrzeugtür (P) zu bilden, umfassend mindestens eine bewegliche Glasscheibe (1), die auf ihrer zum Inneren des Fahrzeugs gewandten Seite mindestens einen Gleitschuh (21) trägt, der in Bezug zu einer Führungsschiene (3) zum Gleiten der beweglichen Glasscheibe (1) zwischen einer Schließposition und mindestens einer Öffnungsposition gleitend montiert ist, wobei der mindestens eine Gleitschuh (21) reversibel auf einem einstückigen, fest auf der beweglichen Glasscheibe (1) montierten Gleitschuhträger (22) montiert ist, und obere und untere Enden aufweist, **dadurch gekennzeichnet, dass** der mindestens eine Gleitschuh (21) und der mindestens eine Gleitschuhträger (22) dazu eingerichtet sind, dass der Gleitschuh (21) über die oberen und unteren Enden des Gleitschuhträgers (22) mittels Gleiten auf dem Gleitschuhträger (22) eingesetzt werden kann.

2. Verglasungsanordnung nach Anspruch 1, **dadurch gekennzeichnet, dass** der Gleitschuh (21) oder der entsprechende Gleitschuhträger (22) eine Vorrichtung (4) zum Halten des Gleitschuhs (21) auf dem Gleitschuhträger (22) trägt.

3. Verglasungsanordnung nach Anspruch 2, **dadurch gekennzeichnet, dass** die Haltevorrichtung (4) eine verformbare Rastzunge umfasst, die vom Gleitschuhträger (22) oder vom Gleitschuh (21) getragen wird und dazu angepasst ist, mit einer Ausnehmung (214) zusammenzuwirken, die auf dem Gleitschuh (21) bzw. dem Gleitschuhträger (22) vorgesehen ist.

4. Verglasungsanordnung nach Anspruch 1, **dadurch gekennzeichnet, dass** sie eine Vorrichtung (4) zum Halten des Gleitschuhs (21) auf dem entsprechenden Gleitschuhträger (22) umfasst, welche die Form eines Stifts, der durch den Gleitschuh (21) und den Gleitschuhträger (22) hindurchgeht, oder eines Stücks annimmt, das in den Gleitschuh (21) und den Gleitschuhträger (22) einrastet.

5. Verglasungsanordnung nach einem der Anspruche 1 bis 4, **dadurch gekennzeichnet, dass** sich der Gleitschuhträger (22) entlang eines der Seitenränder der beweglichen Glasscheibe (1) auf ihrer zum Inneren des Fahrzeugs gewandten Seite erstreckt.

6. Verglasungsanordnung nach Anspruch 5, **dadurch gekennzeichnet, dass** der Gleitschuhträger (22) oder der Gleitschuh (21) ein T-Profil aufweist und der Gleitschuh (21) oder der Gleitschuhträger (22) jeweils eine Nut zur Aufnahme des Profils mit zum Profil komplementärer Form aufweist, so dass der Gleitschuh (21) durch Aufschieben auf den Gleitschuhträger (22) von einem Ende des Gleitschuhträgers (22) aus eingesetzt werden kann.

7. Verglasungsanordnung nach einem der Ansprüche 1 bis 6, **dadurch gekennzeichnet, dass** der Gleitschuhträger (22) direkt auf der beweglichen Glasscheibe (1) mittels Kleben befestigt ist.

8. Verglasungsanordnung nach einem der Ansprüche 1 bis 7, **dadurch gekennzeichnet, dass** der Gleitschuh (21) mindestens einen Führungsabschnitt (211) in der Führungsschiene (3) umfasst, der mittels eines Zwischenabschnitts (212) mit einem Verbindungsabschnitt (213) an dem Gleitschuhträger (22) und der beweglichen Glasscheibe (1) verbunden ist.

9. Verglasungsanordnung nach einem der Ansprüche 1 bis 8, **dadurch gekennzeichnet, dass** die mindestens eine bewegliche Glasscheibe (1) auf ihrer zum Inneren des Fahrzeugs gewandten Seite zwei Gleitschuhe (21) trägt, die an den gegenüberliegenden Seitenrändern der Glasscheibe (1) positioniert und relativ zu einer korrespondierenden Führungsschiene (3) gleitend montiert sind.

10. Kraftfahrzeugtür (P), **dadurch gekennzeichnet, dass** sie eine Verglasungsanordnung nach einem der Ansprüche 1 bis 9 umfasst.

11. Kraftfahrzeug, **dadurch gekennzeichnet, dass** es mindestens eine Verglasungsanordnung nach einem der Ansprüche 1 bis 9 umfasst.

12. Verfahren zur Herstellung und/oder Montage einer verglasten Anordnung nach einem der Ansprüche 1 bis 9, das die folgenden Schritte umfasst:
- Befestigung des mindestens einen Gleitschuhträgers (22) auf der Glasscheibe (1);
- Montage der mindestens einen Führungsschiene (3) auf der Tragstruktur;
- Positionierung des mindestens einen Gleitschuhs (21) auf der mindestens einen Führungsschiene (3) vor oder nach der Montage der mindestens einen Führungsschiene (3) auf der Tragstruktur;
**dadurch gekennzeichnet, dass** es den folgenden Schritt umfasst:
- Montage der Glasscheibe (1), die den mindestens einen Gleitschuhträger (22) trägt, auf dem mindestens einen Gleitschuh (21) durch Einsetzen und Gleiten des mindestens einen Gleitschuhs (21) an dem mindestens einen Gleitschuhträger (22), wobei das Einsetzen des mindestens einen Gleitschuhs (21) über die oberen und unteren Enden des Gleitschuhträgers (22) erfolgen kann.

13. Verfahren nach Anspruch 12, **dadurch gekennzeichnet, dass** der Gleitschuh (21) provisorisch mittels einer Haltevorrichtung auf der Führungsschiene (3) in Position gehalten wird, um den Schritt der Montage der Glasscheibe (1) auf dem mindestens einen Gleitschuh (21) zu erleichtern.

## Claims

1. Glazed device which is intended to be assembled on a door box in order to form a motor vehicle door (P), comprising at least one movable glazed panel (1) which carries, on the face thereof orientated towards the interior of the vehicle, at least one guide runner (21) which is mounted so as to slide relative to a guide rail (3) when the movable glazed panel (1) slides between a blocking position and at least one open position, the at least one guide runner (21) being mounted in a reversible manner on a monobloc runner support (22) which is mounted so as to be fixed to the movable glazed panel (1) and which has upper and lower ends, **characterised in that** the at least one guide runner (21) and the at least one runner support (22) are configured so that the guide runner (21) can be inserted by means of sliding on the runner support (22) via the upper and lower ends of the runner support (22).

2. Glazed device according to claim 1, **characterised in that** the guiding runner (21) or the corresponding runner support (22) carries a retention device (4) of the guide runner (21) on the runner support (22).

3. Glazed device according to claim 2, **characterised in that** the retention device (4) comprises a deformable snap-fit tab which is carried by the runner support (22) or the guide runner (21) and which is suitable for cooperating with a recess (214) provided on the guide runner (21) or the runner support (22), respectively.

4. Glazed device according to claim 1, **characterised in that** it comprises a retention device (4) for the guide runner (21) on the corresponding runner support (22) in the form of a pin which extends through the guide runner (21) and the runner support (22) or a component which snap-fits on the guide runner (21) and the runner support (22).

5. Glazed device according to any one of claims 1 to 4, **characterised in that** the runner support (22) extends along one of the lateral edges of the movable glazed panel (1) on the face thereof which is orientated towards the interior of the vehicle.

6. Glazed device according to claim 5, **characterised in that** the runner support (22) or the guiding runner (21) has a T-shaped profile and the guide runner (21) or the runner support (22), respectively, has a groove which is for receiving the profile having a shape and which complements the profile so that the guide runner (21) can be inserted by means of sliding on the runner support (22) from an end of the runner support (22).

7. Glazed support according to any one of claims 1 to 6, **characterised in that** the runner support (22) is fixed directly to the movable glazed panel (1) by means of adhesive bonding.

8. Glazed device according to any one of claims 1 to 7, **characterised in that** the guide runner (21) comprises at least one guiding portion (211) in the guide rail (3) which is connected via an intermediate portion (212) to a connection portion (213) with the runner support (22) and the movable glazed panel (1).

9. Glazed device according to any one of claims 1 to 8, **characterised in that** the at least one movable glazed panel (1) carries, on the face thereof which is orientated towards the interior of the vehicle, two guide runners (21) which are positioned on the opposing lateral edges of the glazed panel (1) and which are mounted so as to slide relative to a corresponding guide rail (3).

10. Motor vehicle door (P), **characterised in that** it comprises a glazed device according to any one of claims 1 to 9.

11. Motor vehicle, **characterised in that** it comprises at least one glazed device according to any one of claims 1 to 9.

12. Method for producing and/or mounting a glazed device according to any one of claims 1 to 9 which comprises the steps of:
- fixing the at least one runner support (22) to the glazed panel (1);
- mounting the at least one guide rail (3) on the door structure;
- positioning the at least one guide runner (21) on the at least one guide rail (3) before or after the assembly of the at least one guide rail (3) on the door structure;
**characterised in that** it comprises the step of:
- mounting the glazed panel (1) which carries the at least one runner support (22) on the at least one guide runner (21) by inserting and sliding the at least one guide runner (21) on the at least one runner support (22), the insertion of the at least one guide runner (21) being able to be carried out via the upper and lower ends of the runner support (22).

13. Method according to claim 12, **characterised in that** the guide runner (21) is held provisionally in position on the guide rail (3) using a retention device in order to facilitate the step of mounting the glazed panel (1) on the at least one guide runner (21).
